# EUROPEAN PATENT SPECIFICATION

(11) **EP 2 384 618 B1**
(45) Date of publication and mention of the grant of the patent: **14.02.2024**
(21) Application number: 11162427.6
(22) Date of filing: 14.04.2011
(51) Int. Cl.: A01K 11/00

(54) **SYSTEM FOR MARKING A NON-HUMAN BIOLOGICAL OBJECT AND REMOVING A SAMPLE**
System zur Markierung eines nichtmenschlichen biologischen Objekts und zur Probeentnahme
Système de marquage d'objet biologique non humain et prélèvement d'un échantillon

(30) Priority: 14.04.2010 NL 2004551
(43) Date of publication of application: 09.11.2011
(73) Proprietor: Nehls, Reinhard, 46397 Bocholt (DE)
(72) Inventor: Nehls, Reinhard, 46397 Bocholt (DE)
(74) Representative: EP&C

(56) References cited:
- WO-A1-03/037075
- WO-A1-2004/010773
- WO-A2-2006/045162
- GB-A- 2 139 156

## Description

The present invention relates to a system for marking a non-human biological object and at the same time removing a sample of the biological object.

In particular, the invention relates to marking and taking a sample of animals. However, the invention also relates to the marking and sampling of other non-human biological objects, such as plants.

The marking may have as primary purpose the unique identification of the object, as is in particular done for livestock.

In the past few years, the desire and need to reliably identify individual animals has been increasing further. Particularly if the animals' meat is intended for human consumption or if the animals are going to be part of the human consumption chain in some other way, there is a need for reliable identification. One example is the BSE problem, where the accurate determination of the origin and the life history of the animals are of importance. However, the reliable identification of animals also is desired for animals that are not destined for consumption, but e.g. is a pet, (race) horse, or the like.

The system which not only provides for a tag, such as an ear tag, to be attached to the animal, but also achieves the simultaneous removal and storage of a sample of biological material from the animal. The removal of a small sample of the biological material and storage thereof in the sample container can have various purposes, e.g. identification of individual animals based on the "genetic fingerprint" which can be determined using the sample taken. The removed sample can also be used for other purposes, such as that one or more test are performed on the sample, e.g. molecular genetic tests, blood test(s), etc.

Such systems are known, inter alia, from WO 02/39810, WO 2005/079562, and WO2008/055690. These known systems include a first tag part, a second tag part, and a pin. The pin has a first end and a second end, and is connected to the first tag part by its first end. The pin is provided with an integrally formed head at its second end. The second tag part is provided with a receiving opening for the head of the pin, such that the pin can be pressed through a part of the biological object, e.g. through the ear of an animal, and subsequently through the receiving opening of the second tag part. Commonly, and as preferred in the invention, the receiving opening is forcibly elastically expanded in the process to allow the head to pass through the opening. A shoulder of the head then engages behind a suitable retention rim portion of the second tag part. Thereby the first and second tag parts are attached to one another and to the biological object via the pin.

These known system furthermore comprise a sample container with an introduction opening for introducing a sample of biological material of the object into the sample container. The sample container is attached to the second tag part via a releasable connection, in such a manner that the opening of the sample container and the receiving opening of the second tag part lie in line.

These known system furthermore comprise a sample removing stopper which - while attaching the tag parts on biological object and removing the sample there from - is positioned on the head of the pin and is pressed through the biological object, thereby removing the sample, followed by introduction of the sample and the stopper into the sample container, said stopper thereby sealing the introduction opening of the sample container. The closed sample container can then be removed from the second tag part or is disconnected there from in the mentioned process.

In these known system the head of the pin has an integral stopper engaging portion on the front end thereof that is adapted to mate with the rear end of the stopper so as to detachably hold the stopper on the head at least until introduction thereof into the sample container. The stopper engaging portion remains integral with the head of the pin after completion of the process.

WO 02/39810 and WO2008/055690 discloses such systems wherein the head of the pin is provided with an integral centrally arranged stub that protrudes forward from the head. The stopper has a corresponding recess on its rear side into which the stub fits. This provides for a reliable retention of the stopper onto the head during the piercing process and introduction into the sample container.

WO2005/079562 discusses the issue of tampering after the tagging system has been properly applied, e.g. on the ear of an animal. It is suggested to embody the second tag part with a reinforced receiving opening for the head of the pin. In particular it is proposed to have a ring part and a chamber part on opposite sides of a through opening in the second tag. These ring and chamber parts are made of rigid plastic material to increase the force required for pulling the pin with head out of the receiving opening if it is attempted to reuse the first and second tag parts. It is suggested that such removal will inevitably lead to visible damage to the system.

The design with an integral protruding stub on the front end of the head is preferred over the design in WO2005/079562, wherein the head has a central recess in its front end and wherein the stopper has a rearward protruding stub fitting into this recess. The preference it is based on the fact in WO 2005/079562 the stub projects rearward from the sample container when closed by the stopper, thus making it easier to remove the stopper than in the design with the central recess in the rear of the stopper.

In WO2004/010773 the head of the pin also has a sample stopper retaining stub that protrudes forwardly from the head. An additional ring is pre-arranged on the second tag part behind the head receiving open in order to enhance the tamper evident properties of the system.

It is noted that in WO 03/037075 a system is disclosed wherein an additional force-transmitting member is arranged between the head of the pin and the stopper. This force-transmitting member is automatically detached from the head of the pin after the stopper is introduced in the sample holder and the sample holder released from the second tag part. Therefore the stopper engaging portion is not an integral part of the head. In this design the hollow passage within the pin extends all the way through the head to an opening at the front end of the head. Due to this design the head is less robust and thus more susceptible to tampering.

The present invention aims to provide a system according to the preamble of claim 1, with an enhanced tamper evident function so that a fraudulent disconnection of a pair of tag parts becomes readily recognizable.

The invention proposes that the integral stopper engaging portion of the head is embodied as a visual tamper evident member that is permanently deformed when the head is pushed back through the receiving opening by applying a pressing force on said stopper engaging portion.

The invention is based on the insight that dislodging the head of the pin from the second tag part may be done by pressing forcefully on the head such as to press the head back out of the receiving opening.

In particular in the designs with a centrally arranged and forwardly protruding stub on the head, the pressing force will be concentrated on the central stub itself in a fraudulent removal attempt, as pressing on the surrounding portion of the head would effectively concentrate the pressing force on the annular retention face provided by the second tag part for the shoulder of the head. As - in a preferred embodiment - the annular retention face of the second tag part is provided by a frangible ring portion as tamper evident - concentrating the pressing forces there would result in detaching, e.g. tearing away, the frangible ring portion and thus an indication of tampering. Therefore in such a preferred embodiment, the pressing force is likely to be applied on the central portion of the head, here formed by the central stub.

In a preferred embodiment the second tag part includes an essentially plate shape body of soft first plastic material and a collar embedded in said first material, said collar being made of a harder second plastic material. The collar has a central bore. At one end there is an inwardly protruding rim forming the annular retention face for the shoulder of the head. The annular wall of the collar extends over a length preferably such that the head does not protrude from the collar. The bore is - in a preferred embodiment - designed to retain the sample container therein in a releasable manner.

As is preferred - a narrowed portion of the collar is present between the retention rim that forms the annular retention face on the one hand and the annular wall portion of the collar on the other hand, such that overstressing the rim in an attempt to dislodge the head will result in breaking, e.g. tearing, of said narrowed portion.

The present invention envisages in a preferred embodiment that the central stub is designed such that permanent deformation will occur when sufficient force is applied thereon to force the head back out of the receiving opening.

Preferably - as is known - the central stub is of a relatively rigid plastic material, embedded in softer plastic material of the head.

As is most preferred the head includes a ring member of relatively rigid plastic material, preferably monolithic with the central stub, the ring member defining the shoulder of the head.

Preferably the stopper engaging portion is permanently deformed when a pressing force is applied of 50% of the force that is required to press the head in said manner back out of the receiving opening at 20° Celsius.

Preferably the permanent deformation after pressing the head back out of the receiving opening is at least 2 millimetres.

In a preferred embodiment the stopper engaging portion of the head has a protruding stub with a central opening therein of tapering shape, said central opening widening towards the front end of the stub, e.g. a conical opening.

In a preferred embodiment the stopper engaging portion has a protruding stub having multiple segments, possibly neighbouring segments being interconnected by frangible bridges. For example the protruding stub is composed of a group of rod members that are each only attached at their rear end to the head, or possibly additional interconnected via one or more frangible bridges. This arrangement can be obtained via injection moulding, wherein a cavity is present for each rod member, or via making one or more incisions or bores in the injection moulded structure so as to form the rod members, possibly while maintaining some frangible connections between adjacent rod members. The group of rod members could be arranged around a central opening of the stub when desired.

In a preferred embodiment the stopper has a protruding boss fitting into the central tapering opening of the protruding stub on the head, as well as an annular wall portion fitting around said stub.

In a preferred embodiment the stopper engaging portion of the head comprises one or more rigid parts embedded in softer plastic material of the head, the rigid parts having a greater rigidity than the softer plastic material and sufficient strength to remain intact when applying the ear tag, the rigid parts having a strength such that one or more of them are permanently fractured and/or permanently deformed and/or permanently displaced with respect to the softer material when an attempt is made to press the head back out of the receiving opening.

In a preferred embodiment the stopper engaging portion of the head is embodied to change colour of at least a portion thereof when an attempt is made to press the head back out of the receiving opening, e.g. a whitening of stressed and plastically deformed plastic material or by breaking of one or more dye containing capsule(s) embedded in the stopper engaging portion or by exposing a portion of a visually distinctive colour originally covered by another differently colored portion.

In a preferred embodiment the tag parts are embodied as ear tag parts for tagging an animal.

The present invention relates to a system according to the preamble of claim 1, wherein the stopper engaging portion of the head has a protruding stub, and wherein the stub has a central opening, preferably a blind opening, the central opening being of tapering shape and widening towards the front end of the stub, e.g. a conical opening. In a preferred embodiment thereof the stub is composed of multiple segments, e.g. in a circular arrangement, possibly neighbouring segments being interconnected by frangible bridges. As is preferred the stub is embodied as a visual tamper evident member that is permanently deformed when the head is pushed back through the receiving opening by applying a pressing force on said stopper engaging portion.

The present invention also relates to a method for tagging a non-human biological object according to claim 5.

Additional features are claimed in dependent claims 2-4.

The invention will now be explained in more detail referring to the drawings.

In the drawings:
Fig. 1 shows (partly in cross section) a preferred embodiment of ear tag parts of a system according to the invention,
Fig. 2 shows schematically the plastic deformation of the central stub when subject to a pressing force to force the head out of the receiving opening,
Fig. 3 shows a front view of a second embodiment of the head of the female tag part of the system according to the invention,
Fig. 4 shows in cross section the stopper engaging portion of the head in figure 1 and a preferred embodiment of a stopper held releasably on said portion.

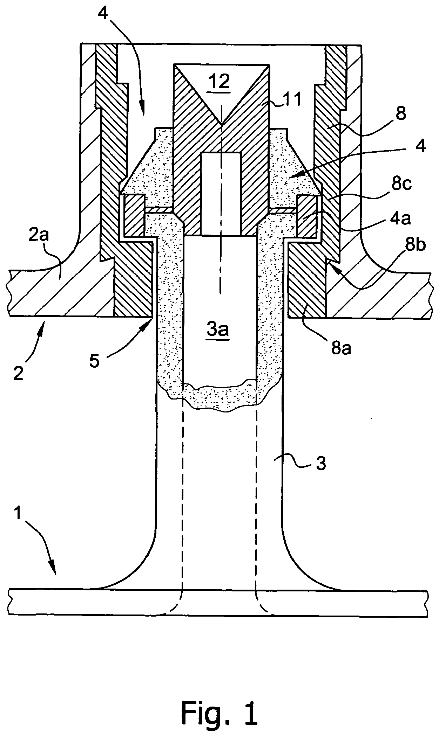

In figure 1 the first and second ear tag parts 1, 2 are shown of a system for marking a non-human biological object and removing a sample of the object, in this example the ear of an animal.

In this example, the pin 3 is integrally formed by injection moulding with the first tag part 1, so that here the first end thereof is monolithic with the plate shaped body of the tag part 1.

At is second end the pin 3 is formed with an integral head 4.

The second, or female ear tag part 2, is provided with a receiving opening 5.

As the ear tag parts are shown in connected condition which is obtained after the tag parts have been attached to the ear of the animal, and after the sample container with sample therein and closed by the stopper has been removed, the stopper and sample container are not shown in figure 1.

As is known, e.g. in the prior art references cited above, the sample container has an introduction opening for introducing a sample of biological material of the object into the sample container. The sample container is originally attached to the second tag part via a releasable connection, in such a manner that the opening of the sample container and the receiving opening of the second tag part lie in line.

As is known the sample removing stopper - while attaching the tag parts on biological object and removing the sample there from - is positioned on the head 4 of the pin 3 and is pressed through the biological object thereby removing the sample 30. The stopper then enters the receiving opening 5 followed by introduction of the sample and the stopper into the sample container. The head also passes through the receiving opening 5 to reach the position shown in figure 1. As is known the stopper seals the introduction opening of the sample container.

In this example it is envisaged that the sample container is held in on the second tag part via a snap fit, so that the closed container can be easily removed and/or is disconnected from the second tag part in the application process.

The head 4 has an integral stopper engaging portion 10 on the front end thereof adapted to mate with the rear of the stopper so as to detachably hold the stopper on the head at least until introduction thereof into the sample container.

As is preferred the pin 3 is hollow with central cavity 3a open at the side of the first tag part, so that a support pin of application pliers (known in the art) can be introduced into the pin 3. As is preferred this central cavity extends into the rear side of a rigid element forming the protruding stub 11 of the head, so that said rigid element is supported directly on said support pin during application of the tag.

As will be explained in more detail below the integral stopper engaging portion 10 of the head 4 is embodied as a visual tamper evident member that is permanently deformed when - in order to disconnect the pin 3 from the second tag part; as may be done when fraudulent reuse of the ear tag parts is made - the head 4 is pushed back through the receiving opening by applying a pressing force on said stopper engaging portion.

In a preferred embodiment the stopper engaging portion has strength such that it is permanently deformed when a pressing force is applied of 50% of the force that is required to press the head in said manner back out of the receiving opening at 20° Celsius. It is proposed to make the stopper engaging portion of a plastic material with a Vicat temperature above 140 °C.

Preferably the mechanical deformation is at least 2 millimetres.

The stopper engaging portion 10 of the head 4 has a protruding stub 11. The stub 11 here has a central opening 12, here as preferred a blind opening 12. The central opening 12 is of tapering shape and widening towards the front end of the stub, preferably such that the wall thickness of the stub 11 surrounding the opening 12 is thinning towards the front end. As is preferred the opening 12 is a conical opening.

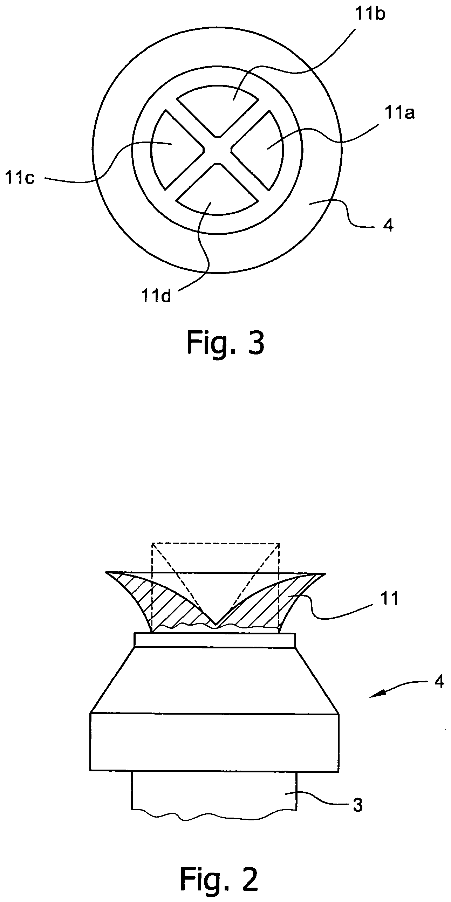

If a pressing tool is placed on the front end of the stub 11 to press the head 4 backwards, the stub 11 will deform permanent as is indicated in figure 2. The thin wall of the stub portion surrounding the opening 12 will fail and bend outwards, e.g. like a rivet. This deformation is clearly visible, the visibility possibly being enhanced by a color change, e.g. whitening of the plastic material. The deformation will prevent or make more difficult the re-application of the ear tag. Any attempt to repair the damage to the stub 11 will likely be visible as well.

In order to make the stub 11 more fragile and susceptible to deformation it is proposed to embody the stopper engaging portion with a protruding stub, and to embody the stub as composed of multiple segments, e.g. in a circular arrangement, possibly neighbouring segments being interconnected by frangible bridges. An example is shown in figure 3 where the segments 11a, b, c, d are shown. Here the segments are shown from the front end of the head, each segment effectively being a rod member that is only attached to the head at its rear end. If desired a frangible bridge could be formed, e.g. moulded, between neighbouring rod members. In another embodiment, for example, the segments are formed as concentric ring members with annular grooves between ring members.

It will be appreciated that the segments may together define a central opening with a tapering shape, similar to figure 1.

In the embodiment shown in figure 3 one could also envisage that the spaces between the segments 11 a, b, c, d are filled with relatively soft plastic material, whereas the segments themselves are, as is preferred, of more rigid plastic material. It can then be envisaged that in an attempt to press the head back out of the bore, these segments are permanently deformed and/or permanently displaced with respect to the softer material between the segments, or even that one or more of said segments break if they are sufficiently brittle. One could envisage that the softer plastic has a different color than the more rigid plastic, there enhancing the visibility of any of these effects, and thus further evidencing the tampering attempt.

As is preferred the second tag part 2 includes a plate shaped body 2a of soft and relatively flexible plastic material. A collar 8 of harder plastic material is embedded in the softer material of the second tag part 2. The collar 8 has a central bore, here open at both the entry end of the stopper and the head (the receiving opening) and open at the opposite end (where the sample container is originally extending from the collar).

The collar has an inwardly protruding rim 8a connected via a narrowed portion 8b of the collar to an annular wall part 8c of the collar 8. The narrowed portion 8b is designed to have a limit breaking or rupture strength. The preferred presence of such a rim 8a with narrowed portion, will lead a fraudulent person to concentrate the pressing back force on the stub 11, as pressing on the head portion surrounding the stub 11 will lead to tearing away of the rim 8a which also evidences tampering.

As is preferred the head 4 includes a rigid ring member 4a forming the shoulder of the head engaging behind the rim 8a. Said ring member 4a increases the force required to push back the head through the opening 5.

As is preferred the ring member 4a forming the shoulder of the head 4 and the central stub 11 are made as a monolithic plastic element of relatively rigid material, said element being embedded in the softer plastic material that constitutes the pin 3 and the body of the part 1.

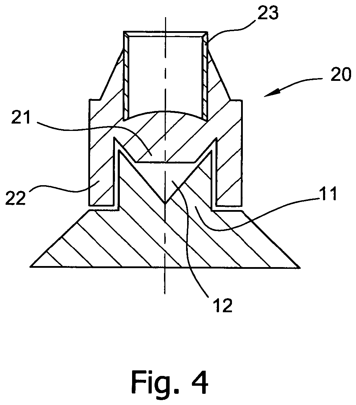

In figure 4 it is shown that the stopper 20 has a rearward protruding boss 21, e.g. formed by a lens if the stopper body is made of transparent plastic, fitting into the central tapering opening 12, as well as an annular wall portion 22 that fits around the said central stub 11, the annular wall portion 22 extending further rearward than the protruding boss 21. As is preferred a metal cutting cylinder 23 is embedded in the stopper at the front end thereof.

## Claims

1. System for marking a non-human biological object and removing a sample of the object, comprising:
- a first tag part (1),
- a second tag part (2)
- a pin (3), having a first end and a second end, which pin is connected to the first tag part by its first end and which pin is provided with an integral head (4) at its second end,
- in which the second tag part is provided with a receiving opening (5) for the head (4) of the pin, such that the pin can be pressed through a part of the biological object, in particular through the ear of an animal, and subsequently through the receiving opening of the second tag part (2), as a result of which the first and second tag parts are attached to one another and to the biological object via the pin,
which system furthermore comprises:
- a sample container with an introduction opening for introducing a sample of biological material of the object into the sample container, which sample container is attached to the second tag part (2) via a releasable connection, in such a manner that the opening of the sample container and the receiving opening (5) of the second tag part lie in line,
- a sample removing stopper (20) which - while attaching the tag parts on the biological object and removing the sample therefrom - is positioned on the head (4) of the pin (3) and is pressed through the biological object thereby removing the sample, followed by introduction of the sample and the stopper into the sample container, said stopper thereby sealing the introduction opening of the sample container,
wherein the head has an integral stopper engaging portion (11) on the front end thereof that protrudes forward and that is adapted to mate with a corresponding recess (12) at the rear of the stopper (20) so as to detachably hold the stopper on the head at least until introduction thereof into the sample container,
**characterized in that**
the integral stopper engaging portion (11) of the head is embodied as a visual tamper evident member that is permanently deformed when - in order to disconnect the pin from the second tag part - the head is pushed back through the receiving opening by applying a pressing force on said stopper engaging portion,
and **in that** the integral stopper engaging portion (11) is embodied according to one or more of the following measures a), b), c), d):
a) the stopper engaging portion of the head being a protruding stub (11) with a central opening (12), preferably a blind opening, the central opening being of tapering shape and widening towards the front end of the stub, e.g. a conical opening,
b) the stopper engaging portion of the head being a protruding stub (11), and the stub being composed of multiple segments (11a, b, c, d), e.g. in a circular arrangement, possibly neighbouring segments being interconnected by one or more frangible bridges,
c) the stopper engaging portion (11) of the head comprises one or more rigid parts embedded in softer plastic material of the head, the one or more rigid parts having a greater rigidity than the softer plastic material and sufficient strength to remain intact when applying the tag parts to the object, the rigid parts having a strength such that one or more of them are permanently fractured and/or permanently deformed and/or permanently displaced with respect to the softer plastic material when the head is pressed back out of the receiving opening,
d) the stopper engaging portion of the head being embodied to change colour, at least a portion of the stopper engaging portion, when the head back is pressed back out of the receiving opening, e.g. a whitening of the plastic material or by breaking of one or more dye containing capsule(s) embedded in the stopper engaging portion or by exposing a portion of a visually distinctive colour originally covered by another differently colored portion.

2. System according to claim 1, wherein the stopper engaging portion of the head being a protruding stub (11) with a central opening (12), preferably a blind opening, the central opening being of tapering shape and widening towards the front end of the stub, e.g. a conical opening, and wherein the stopper (20) has a rearward protruding boss (21) fitting into the central tapering opening (12), as well as an annular wall portion (22) that fits around the said central stub (11), the annular wall portion extending further rearward than the protruding boss.

3. System according to claim 1 or 2, wherein second tag part is provided with a frangible ring portion (8a), said ring portion forming the receiving opening (5) as well as an annular retention face for the head (4) once it is pressed through the receiving opening, said frangible ring portion acting as a further tamper evident for an attempt to disconnect the pin from the second tag part.

4. System according to one or more of the preceding claims, wherein the pin (3) is hollow with central cavity (3a) open at the side of the first tag part, so that a support pin of application pliers can be introduced into the pin (3), preferably said central cavity extending into the rear side of a rigid element forming the protruding stub (11) of the head.

5. A method for tagging a non-human biological object and removing a sample of the object, wherein use is made of a system according to one or more of the preceding claims.

## Patentansprüche

1. System zur Markierung eines nicht-menschlichen biologischen Objekts und zur Entnahme einer Probe des Objekts, umfassend:
- einen ersten Markierungsteil (1),
- einen zweiten Markierungsteil (2)
- einen Stift (3) mit einem ersten und einem zweiten Ende, wobei der Stift mit seinem ersten Ende mit dem ersten Markierungsteil verbunden ist verbunden ist und der Stift an seinem zweiten Ende mit einem integrierten Kopf (4) versehen ist,
- wobei der zweite Markierungsteil mit einer Aufnahmeöffnung (5) für den Kopf (4) des Stifts versehen ist, so dass der Stift durch einen Teil des biologischen Objekts, insbesondere durch das Ohr eines Tieres, gedrückt werden kann, und anschließend durch die Aufnahmeöffnung des zweiten Markierungsteils (2) gedrückt werden kann, wodurch über den Stift das erste und zweite Markierungsteil miteinander und mit dem biologischen Objekt verbunden sind,
wobei das System weiterhin umfasst:
- einen Probenbehälter mit einer Einführungsöffnung zum Einführen einer biologischen Materialprobe des Objekts in den Probenbehälter, wobei der Probenbehälter über eine lösbare Verbindung an dem zweiten Markierungsteil (2) befestigt ist, so dass die Öffnung des Probenbehälters und die Aufnahmeöffnung (5) des zweiten Markierungsteils in einer Linie liegen,
- einen Probenentnahmestopfen (20), der beim Anbringen der Markierungsteile am biologischen Objekt und beim Entfernen der Probe daraus - auf dem Kopf (4) des Stifts (3) positioniert und durch das biologische Objekt gedrückt wird, wodurch die Probe entfernt wird, gefolgt von Einführen der Probe und des Stopfens in den Probenbehälter, wobei der Stopfen die Einführungsöffnung des Probenbehälters verschließt,
wobei der Kopf einen integralen Stopfeneingriffsbereich (11) an seinem vorderen Ende aufweist, der nach vorne vorsteht und mit einer entsprechenden Aussparung (12) an der Rückseite des Stopfens (20) zusammenpasst, um den Stopfen zumindest bis zu seiner Einführung in den Probenbehälter abnehmbar am Kopf zu halten,
**dadurch gekennzeichnet, dass**
der integrale Stopfeneingriffsbereich (11) des Kopfes als ein visuell manipulationssicheres Element ausgeführt ist, das permanent verformt wird, wenn - um den Stift vom zweiten Markierungsteil zu trennen - der Kopf durch die Aufnahmeöffnung zurückgeschoben wird, indem eine Druckkraft auf den Stopfeneingriffsbereich ausgeübt wird,
und **dass** der integrale Stopfeneingriffsbereich (11) gemäß einer oder mehreren der folgenden Maßnahmen a), b), c), d) ausgeführt ist:
a) der Stopfeneingriffsbereich des Kopfes ein vorstehender Stutzen (11) mit einer zentralen Öffnung (12) ist, vorzugsweise einer Blindöffnung, wobei die zentrale Öffnung eine sich verjüngende Form hat und sich zum vorderen Ende des Stutzens hin erweitert, z.B. eine konische Öffnung,
b) der Stopfeneingriffsbereich des Kopfes ein vorstehender Stutzen (11) und der Stutzen aus mehreren Segmenten (11a, b, c, d), z.B. in einer kreisförmigen Anordnung, zusammengesetzt ist, wobei möglicherweise benachbarte Segmente durch eine oder mehrere zerbrechliche Brücken miteinander verbunden sind,
c) der Stopfeneingriffsbereich (11) des Kopfes ein oder mehrere starre Teile umfasst, die in weicheres Kunststoffmaterial des Kopfes eingebettet sind, wobei das eine oder die mehreren starren Teile eine größere Steifigkeit als das weichere Kunststoffmaterial und eine ausreichende Festigkeit aufweisen, um intakt zu bleiben, wenn die Markierungsteile an dem Objekt angewendet werden, und die starren Teile eine solche Festigkeit aufweisen, dass eines oder mehrere derselben dauerhaft gebrochen und/oder dauerhaft verformt und/oder dauerhaft verschoben werden in Bezug auf das weichere Kunststoffmaterial, wenn der Kopf aus der Aufnahmeöffnung zurückgedrückt wird,
d) der Stopfeneingriffsbereich des Kopfes so ausgebildet ist, dass er seine Farbe ändert, zumindest ein Teil des Stopfeneingriffsbereichs, wenn der Kopf wieder aus der Aufnahmeöffnung herausgedrückt wird, z. B. ein Aufhellen des Kunststoffmaterials, oder durch Aufbrechen einer oder mehrerer Farbstoffkapsel(n), die in den mit dem Stopfen in Eingriff kommenden Teil eingebettet ist/sind, oder durch das Freilegen eines Bereichs einer visuell auffälligen Farbe, der ursprünglich von einem weiteren, andersfarbigen Bereich bedeckt war.

2. System nach Anspruch 1, wobei der Stopfeneingriffsbereich des Kopfes ein vorstehender Stutzen (11) mit einer zentralen Öffnung (12), vorzugsweise einer Blindöffnung, ist, wobei die zentrale Öffnung eine sich verjüngende Form hat und sich zum vorderen Ende des Stutzens hin erweitert, z.B. eine konische Öffnung, und wobei der Stopfen (20) einen nach hinten vorspringenden Fortsatz (21) aufweist, der in die zentrale, sich verjüngenden Öffnung (12) passt, sowie einen ringförmigen Wandabschnitt (22), der um den zentralen Stutzen (11) passt, wobei sich der ringförmige Wandabschnitt weiter nach hinten erstreckt als der vorstehende Fortsatz.

3. System nach Anspruch 1 oder 2, wobei der zweite Markierungsteil mit einem zerbrechlichen Ringabschnitt (8a) versehen ist, wobei der Ringabschnitt die Aufnahmeöffnung (5) sowie eine ringförmige Rückhaltefläche für den Kopf (4) bildet, sobald er durch die Aufnahmeöffnung gedrückt wird, wobei der zerbrechliche Ringabschnitt als weiterer Manipulationsnachweis für einen Versuch, den Stift vom zweiten Markierungsteil zu lösen, wirkt.

4. System nach einem oder mehreren der vorhergehenden Ansprüche, wobei der Stift (3) hohl ist, mit einem zentralen Hohlraum (3a), der an der Seite des ersten Markierungsteils offen ist, so dass ein Stützstift einer Applikationszange in den Stift (3) eingeführt werden kann, wobei sich der zentrale Hohlraum vorzugsweise in die Rückseite eines starren Elements erstreckt, das den vorstehenden Stutzen (11) des Kopfes bildet.

5. Verfahren zur Markierung eines nicht-menschlichen biologischen Objekts und zur Entnahme einer Probe des Objekts, wobei ein System nach einem oder mehreren der vorhergehenden Ansprüche verwendet wird.

## Revendications

1. Système de marquage d'un objet biologique non humain et de retrait d'un échantillon de l'objet, comprenant :
- une première partie d'étiquette (1),
- une deuxième partie d'étiquette (2)
- une broche (3), ayant une première extrémité et une deuxième extrémité, ladite broche étant connectée à la première partie d'étiquette par sa première extrémité et ladite broche étant pourvue d'une tête intégrée (4) à sa deuxième extrémité,
- dans lequel la deuxième partie d'étiquette est pourvue d'une ouverture de réception (5) pour la tête (4) de la broche, de sorte que la broche peut être pressée à travers une partie de l'objet biologique, en particulier à travers l'oreille d'un animal, et ensuite à travers l'ouverture de réception de la deuxième partie d'étiquette (2), en conséquence de quoi les première et deuxième parties d'étiquette sont fixées l'une à l'autre et à l'objet biologique par l'intermédiaire de la broche,
ledit système comprenant en outre :
- un récipient d'échantillon avec une ouverture d'introduction pour introduire un échantillon de matériau biologique de l'objet dans le récipient d'échantillon, ledit récipient d'échantillon étant fixé à la deuxième partie d'étiquette (2) par l'intermédiaire d'une connexion amovible, de telle manière que l'ouverture du récipient d'échantillon et l'ouverture de réception (5) de la deuxième partie d'étiquette soient alignées,
- un bouchon de retrait d'échantillon (20) qui, tout en fixant les parties d'étiquette sur l'objet biologique et en retirant l'échantillon de celui-ci, est positionné sur la tête (4) de la broche (3) et est pressé à travers l'objet biologique de façon à retirer l'échantillon, suivi de l'introduction de l'échantillon et du bouchon dans le récipient d'échantillon, ledit bouchon scellant ainsi l'ouverture d'introduction du récipient d'échantillon,
dans lequel la tête comporte une partie de mise en prise de bouchon intégrée (11) sur l'extrémité avant de celle-ci qui fait saillie vers l'avant et qui est adaptée pour s'accoupler avec un évidement correspondant (12) à l'arrière du bouchon (20) de façon à maintenir de façon amovible le bouchon sur la tête au moins jusqu'à l'introduction de celui-ci dans le récipient d'échantillon,
**caractérisé en ce que**
la partie de mise en prise de bouchon intégrée (11) de la tête est réalisée sous la forme d'un élément visuel d'inviolabilité qui est déformé de façon permanente lorsque, afin de détacher la broche de la deuxième partie d'étiquette, la tête est repoussée à travers ouverture de réception par application d'une force de pression sur ladite partie de mise en prise de bouchon,
et **en ce que** la partie de mise en prise de bouchon intégrée (11) est réalisée selon une ou plusieurs des mesures suivantes a), b), c), d) :
a) la partie de mise en prise de bouchon de la tête étant une embase saillante (11) avec une ouverture centrale (12), de préférence une ouverture aveugle, l'ouverture centrale étant de forme effilée et s'élargissant vers l'extrémité avant de l'embase, par exemple une ouverture conique,
b) la partie de mise en prise de bouchon de la tête étant une embase saillante (11), et l'embase étant composée de segments multiples (11a, b, c, d), par exemple dans un agencement circulaire, des segments voisins pouvant être interconnectés par un ou plusieurs ponts cassables,
c) la partie de mise en prise de bouchon (11) de la tête comprend une ou plusieurs parties rigides incorporées dans une matière plastique souple de la tête, les une ou plusieurs parties rigides ayant une rigidité plus élevée que la matière plastique souple et une résistance suffisante pour rester intactes lors de l'application des parties d'étiquette sur l'objet, les parties rigides ayant une résistance telle qu'un ou plusieurs d'entre elles sont fracturées de façon permanente et/ou déformées de façon permanente et/ou déplacées de façon permanente par rapport à la matière plastique souple lorsque la tête est pressée vers l'arrière hors de l'ouverture de réception,
d) la partie de mise en prise de bouchon de la tête étant conçue pour changer la couleur d'au moins une partie de la partie de mise en prise de bouchon, lorsque l'arrière de la tête est pressé vers l'arrière hors de l'ouverture de réception, par exemple un blanchiment de la matière plastique ou par rupture d'une ou plusieurs capsules contenant un colorant incorporées dans la partie de mise en prise de bouchon ou par exposition d'une partie d'une couleur visuellement distinctive initialement recouverte par une autre partie de couleur différente.

2. Système selon la revendication 1, dans lequel la partie de mise en prise de bouchon de la tête étant une embase saillante (11) avec une ouverture centrale (12), de préférence une ouverture aveugle, l'ouverture centrale étant de forme effilée et s'élargissant vers l'extrémité avant de l'embase, par exemple une ouverture conique, et dans lequel le bouchon (20) comporte un bossage saillant vers l'arrière (21) s'ajustant dans l'ouverture effilée centrale (12), ainsi qu'une partie de paroi annulaire (22) qui s'ajuste autour de ladite embase centrale (11), la partie de paroi annulaire s'étendant plus loin vers l'arrière que le bossage saillant.

3. Système selon la revendication 1 ou 2, dans lequel la deuxième partie d'étiquette est pourvue d'une partie d'anneau cassable (8a), ladite partie d'anneau formant l'ouverture de réception (5) ainsi qu'une face de rétention annulaire pour la tête (4) une fois qu'elle est pressée à travers l'ouverture de réception, ladite partie d'anneau cassable agissant en tant qu'élément d'inviolabilité supplémentaire en cas de tentative de déconnecter la broche de la deuxième partie d'étiquette.

4. Système selon une ou plusieurs des revendications précédentes, dans lequel la broche (3) est creuse avec une cavité centrale (3a) ouverte sur le côté de la première partie d'étiquette, de sorte qu'une broche de support de pinces d'application peut être introduite dans la broche (3), ladite cavité centrale s'étendant de préférence dans le côté arrière d'un élément rigide formant l'embase saillante (11) de la tête.

5. Procédé d'étiquetage d'un objet biologique non humain et de retrait d'un échantillon de l'objet, dans lequel il est utilisé un système selon une ou plusieurs des revendications précédentes.
